# EUROPÄISCHE PATENTANMELDUNG

(11) **EP 4 549 023 A2**
(43) Veröffentlichungstag der Anmeldung: **07.05.2025**
(21) Anmeldenummer: 24208951.4
(22) Anmeldetag: 25.10.2024
(51) Int. Cl.: B02C 21/02, B62D 33/063, B60J 1/00, B62D 33/06

(54) **MOBILER TROMMELHACKER MIT FAHRERHAUS**

(30) Priorität: 03.11.2023 DE 102023130471
(71) Anmelder: Jenz GmbH, 32469 Petershagen (DE)
(72) Erfinder: Hermeier, Hans Heinrich, Petershagen (DE)
(74) Vertreter: Malescha, Florian

(57) **Zusammenfassung**

Die vorliegende Erfindung betrifft einen mobilen Trommelhacker umfassend ein LKW-Fahrgestell, eine darauf angeordnete Hackerzelle und ein Fahrerhaus, wobei das Fahrerhaus in Bezug auf das LKW-Fahrgestell anhebbar gelagert ist und eine insbesondere ausschließlich mechanische Lenkverbindung zu Rädern des LKW-Fahrgestells aufweist.

## Beschreibung

Die vorliegende Erfindung betrifft einen mobilen Trommelhacker, der auf einem LKW-Fahrgestell aufgebaut ist.

Derartige mobile Trommelhacker sind grundsätzlich bekannt. Beispielsweise offenbart die DE 10 2015 106 209 A1 einen mobilen Trommelhacker aus einer auf einem LKW-Fahrgestell und Antriebsmotor angeordneten Hackerzelle, einem Materialeinzug, einer Materialaustragsvorrichtung sowie einer Ladevorrichtung. Eine Hacktrommel der Hackerzelle ist über einen Nebenantrieb des Antriebsmotors des LKWs mechanisch angetrieben.

Bei den bekannten mobilen Trommelhackern wurden Defizite der Fahrerkabine insbesondere im Hinblick auf den Fahr- und Bedienkomfort sowie im Hinblick auf das zur Verfügung stehende Sichtfeld beim Hackbetrieb identifiziert. Bei der Auslegung von Fahrerkabinen ist ein Kompromiss aus Anforderungen bzw. Wunschvorstellungen und technischer Umsetzbarkeit zu erzielen. Es besteht zum einen das Erfordernis, dass der Fahrer einen komfortablen Fahrersitz und einen ergonomischen Zugriff auf Bedienelemente innerhalb der Fahrerkabine hat. Zum anderen gilt es, die Fahrerkabine für den Betrieb der Hackerzelle zu optimieren, sowohl in ergonomischer Hinsicht als auch in Bezug auf das Sichtfeld.

Dabei hat es sich in der Vergangenheit als nachteilig herausgestellt, wenn sich der Fahrer umsetzen und an einen weiteren, extra dafür konzipierten Bediensitz setzen muss, vor allem wegen der engen Platzverhältnisse in der Fahrerkabine. Um diese Problematik zu lösen, schlägt die DE 10 205 106 209 ein relativ zum Fahrgestell drehbares Fahrerhaus vor, sodass die Bedienperson je nach Bedarf das Führerhaus entweder in Fahrtrichtung oder in entgegengesetzter Hackerrichtung ausrichten kann. Ein Umsetzen ist nicht notwendig. Dabei hat sich allerdings herausgestellt, dass das Fahrerhaus zum einen im Hinblick auf den Komfort beim Hackbetrieb sowie zum anderen im Hinblick auf das Sichtfeld verbesserungsfähig ist. Denn zum einen rotieren die Bedienelemente im Fahrerhaus, insbesondere das Lenkrad und die Pedale, mit dem Fahrerhaus mit und sind dem Fahrzeugführer im Hackbetrieb im Weg. Zum anderen ist die Hackerzelle aufgrund ihrer großen Abmessungen für den Fahrzeugführer nur schwer einsehbar, der Fahrersitz kann auch nur bedingt vertikal nach oben gefahren werden.

Eine Aufgabe der vorliegenden Erfindung besteht darin, die Nachteile aus dem Stand der Technik zu überwinden, insbesondere einen mobilen Trommelhacker bereitzustellen mit einem Fahrerhaus, dessen Komfort und/oder Sicht insbesondere im Hackbetrieb des Trommelhackers verbessert ist.

Die Aufgabe wird durch den Gegenstand der unabhängigen Ansprüche gelöst.

Danach ist ein mobiler Trommelhacker umfassend ein LKW-Fahrgestell, eine darauf angeordnete Hackerzelle und ein Fahrerhaus bereitgestellt. Der mobile Trommelhacker kann grundsätzlich wie in der DE 10 2015 106 209 A1 aufgebaut sein, dessen Offenbarung im Hinblick auf den grundsätzlichen Aufbau und die Funktionsweise des Trommelhackers hierin unter Bezugnahme aufgenommen sind. Die Hackerzelle kann einen Maschinenständer mit einer Hacktrommel, einem Materialeinzug und einem Materialaustragsvorrichtung umfassen. Ferner kann der mobile Trommelhacker eine Ladevorrichtung, beispielsweise in Form eines Krans, aufweisen. Die Hackerzelle kann über einen Nebenantrieb eines Antriebsmotors des LKW-Fahrgestells oder dessen Getriebe angetrieben sein. Des Weiteren ist es möglich, dass die Hackerzelle mit einem eigens dafür konzipierten Antriebsmotor versehen ist. Das LKW-Fahrgestell bildet die Basis beziehungsweise den fahrbaren Untersatz eines LKW. Ein LKW ist gemäß allgemeinem Sprachgebrauch im Sinne der vorliegenden Offenbarung unter anderem dadurch charakterisiert, dass der Antriebsmotor vorne ist und der LKW autobahnfähig ist, also Geschwindigkeiten von über 80 km/h erzielen kann. LKW-basierte Trommelhacker sind mit einer handelsüblichen LKW-Bereifung ausgestattet und sind an die Aufbaurichtlinien des LKW-Herstellers gebunden, sodass Entwickler anders als bei der Entwicklung von Sondereinsatzmaschinen in der Flexibilität beschränkt sind. Grundsätzlich ist das Fahrerhaus oberhalb einer den Antriebsmotor beherbergenden Motorzelle angeordnet und ist in Bezug auf das LKW-Fahrgestell kippbar, um einen Wartungszugang zum Motorraum zu ermöglichen. Im Motorraum kann eine Kühleranordnung in Fahrtrichtung vor dem Antriebsmotor für den Antriebsmotor des LKW untergebracht sein. Das LKW-Fahrgestell kann eine Basis, auch Basisrahmen oder Aufbaurahmen genannt, aufweisen, die zum Aufnehmen und Tragen der Maschinerie für den Hackbetrieb ausgebildet ist. LKWs kennzeichnen sich ferner dadurch aus, dass sie über eine mechanische Lenkverbindung zur Vorderachse verfügen und ein mechanischer Fahr-Antriebsstrang im Chassis vorgesehen ist.

Das Fahrerhaus kann entsprechend des Aufbaus eines üblichen LKWs in Fahrtrichtung vorne, insbesondere oberhalb des Antriebsmotors, angeordnet sein. In Fahrtrichtung dahinter kann die gesamte Maschinerie des mobilen Trommelhackers angeordnet beziehungsweise auf dem LKW-Fahrgestell aufgebaut sein.

Gemäß einem Aspekt der vorliegenden Erfindung ist das Fahrerhaus in Bezug auf das LKW-Fahrgestell anhebbar gelagert und weist eine insbesondere ausschließlich mechanische Lenkverbindung zu Rädern des LKW-Fahrgestells auf. Mit anderen Worten kann das Fahrerhaus derart anhebbar in Bezug auf das LKW-Fahrgestell gelagert sein, dass es eine abgesenkte Fahrstellung für einen Fahrbetrieb und eine erhöhte Hackstellung für einen Hackbetrieb einnehmen kann. Des Weiteren ist es denkbar, dass der mobile Trommelhacker auch im Hackbetrieb bei erhöhter Stellung des Fahrerhauses fahrbar ist, sodass auch im Hackbetrieb der mobile Trommelhacker mobil ist. Beispielsweise beträgt ein Hub des Fahrerhauses mehr als 0,5 m, insbesondere mehr als 0,75 m, mehr als 1 m, oder mehr als 1,25 m. Das Fahrerhaus kann beispielsweise eine Abmessung von etwa 2 x 2 x 2 m aufweisen. Beispielsweise kann der Hub wenigstens 40 %, insbesondere wenigstens 50 % oder wenigstens 60 % einer Fahrerhausvertikalerstreckung betragen. Dadurch, dass das Fahrerhaus in Bezug auf das LKW-Fahrgestell anhebbar ist, kann vor allem der Komfort beim Hackbetrieb erhöht werden. Der Bediener kann von einer erhöhten Position auf die großen Maschinerien auf dem LKW-Fahrgestell blicken und hat dadurch auch einen deutlich besseren Überblick sowie ein deutlich verbessertes Sichtfeld. Beispielsweise ist in dem Fahrerhaus nur ein einziger Sitz angeordnet, der sowohl für den Fahrbetrieb als auch für den Hackbetrieb verwendet wird, sodass die Bedienperson sich nicht umsetzen muss. Dies führt zu einer erheblichen Komfortverbesserung. Gemäß der vorliegenden Erfindung kann trotz der Anhebbarkeit des Fahrerhauses eine mechanische Lenkverbindung realisiert werden. Dies hat den Vorteil, dass zum einen auf die original im LKW verbauten Lenkungsbestandteile Lenkrad, Lenkstock, welche sich im Fahrerhaus befinden, sowie Lenkgetriebe und Lenkgestänge zur Anbindung an die LKW-Räder beibehalten werden können und zum anderen keine zusätzlichen hydraulischen und/oder elektrischen Lenkungskomponenten notwendig sind.

Gemäß einer beispielhaften Ausführung des erfindungsgemäßen Trommelhackers ist das Fahrerhaus rotationsfest in Bezug auf das LKW-Fahrgestell gelagert. Es hat sich herausgestellt, dass die Anhebbarkeit des Fahrerhauses deutlich einfacher zu realisieren ist als die Relativrotation. Des Weiteren ist die Relativrotation zur Bewerkstelligung der beiden unterschiedlichen Betriebe, also des Fahrbetriebs und des Hackbetriebs, nicht erforderlich, wenn sich das Fahrerhaus in einer angehobenen Position für den Hackbetrieb befindet, da aus der angehobenen Position die rückseitige Maschinerie auf dem LKW-Fahrgestell sehr gut einsehbar ist.

In einer weiteren beispielhaften Ausführung der vorliegenden Erfindung ist das Fahrerhaus derart anhebbar in Bezug auf das LKW-Fahrgestell gelagert, dass es eine abgesenkte Fahrstellung für einen Fahrbetrieb und eine erhöhte Hackstellung für einen Hackbetrieb einnehmen kann. In dem Hackbetrieb ist die mechanische Lenkverbindung zu den Rädern aufrechterhalten. Dadurch kann der mobile Trommelhacker auch im Hackbetrieb gesteuert werden. Ferner ist es möglich, dass die Lenkverbindung rein auf mechanischen Komponenten beruht, ohne dass hydraulische und/oder elektrische Lenkungskomponenten notwendig sind.

Gemäß einer beispielhaften Weiterbildung der vorliegenden Erfindung ist das Fahrerhaus zusätzlich in Längsrichtung des Fahrgestells verlagerbar. Das Fahrgestell kann beispielsweise in Fahrrichtung nach vorne oder entgegen der Fahrrichtung nach hinten verlagert werden. Beispielsweise kann das Fahrgestell derart verlagerbar sein, dass es in Fahrtrichtung über eine Längserstreckung des LKW-Fahrgestells über dieses vorsteht. Beispielsweise kann ein Versatz im Bereich von 300 mm bis 1.000 mmm, insbesondere im Bereich von 500 mm bis 800 mm, vorzugsweise von etwa 600 mm, erreicht werden.

Gemäß einer beispielhaften Weiterbildung ist das Fahrerhaus derart anhebbar in Bezug auf das LKW-Fahrgestell gelagert, dass bei einer Hebebewegung, insbesondere auch bei einer Absenkbewegung, zugleich eine Verlagerung in Längsrichtung des Fahrgestells einhergeht. Mit anderen Worten kann das Fahrerhaus beim Anheben, sowie auch beim Absenken, eine kombinierte Hebe- und Verschiebebewegung durchführen, um zum einen die vertikale Höhe des Fahrerhauses und zum anderen dessen horizontale Lage in Bezug auf das LKW-Fahrgestell verändert werden. Vor allem, wenn das Fahrerhaus in Fahrtrichtung nach vorne versetzt wird im Hackbetrieb, wird rückseitig des Fahrerhauses, wo beispielsweise eine Ladevorrichtung, die an einem Kran angeordnet sein kann, angeordnet sein kann, ein Bewegungsspielraum für diesen frei, sodass ein Schwenkbereich der Ladevorrichtung vergrößert ist und somit ein effizienter und flexibler betreibbarer Trommelhacker geschaffen ist.

In einer weiteren beispielhaften Ausführung des erfindungsgemäßen Trommelhackers umfasst dieser ferner einen fest mit dem LKW-Fahrgestell und dem Fahrerhaus verbundenen Hebemechanismus mit einem insbesondere hydraulischen Antrieb. Der Hebemechanismus kann eine Mechanik aufweisen, um zum einen das Fahrerhaus insbesondere in der angehobenen Hackstellung insbesondere stabil zu tragen und zum anderen zur Realisierung der Hebebewegung, sowie ggf. kombiniert mit einer horizontalen Verlagerungsbewegung. Beispielsweise weist der Hebemechanismus ein Gestänge und einen Hydraulikzylinder auf. Über das Gestänge kann hauptsächlich die Tragfunktion sowie ein gegebenenfalls vorhandener horizontaler Bewegungsspielraum des Fahrerhauses relativ zum LKW-Fahrgestell realisiert werden. Der Hydraulikzylinder kann zur Kraftaufbringung zum Anheben oder insbesondere gedämpften und/oder gefederten Absenken des Fahrerhauses verantwortlich sein.

In einer weiteren beispielhaften Weiterbildung umfasst der erfindungsgemäße Trommelhacker einen Hebemechanismus, der ein Federdämpfersystem aufweist. Durch das Federdämpfersystem können die Verlagerungsbewegungen des Fahrerhauses relativ zum LKW-Fahrgestell gedämpft und/oder gefedert werden. Des Weiteren kann das Federdämpfersystem dazu eingerichtet sein, das Fahrerhaus zumindest im Fahrbetrieb in Bezug auf das LKW-Fahrgestell zu dämpfen und/oder zu federn, insbesondere um den Komfort für die Bedienperson beim Fahrbetrieb zu erhöhen.

In einer weiteren beispielhaften Ausführung der vorliegenden Erfindung weist das Federdämpfersystem einen Aktivzustand, in dem eine vertikale Relativbewegung zwischen dem Fahrerhaus und dem LKW-Fahrgestell gefedert und/oder gedämpft wird, und einen Passivzustand auf, in dem eine Relativbewegung zwischen dem Fahrerhaus und dem LKW-Fahrgestell ungefedert und/oder ungedämpft ist, insbesondere ausgeschlossen ist. Es hat sich herausgestellt, dass es für einen präzisen Hackbetrieb des Trommelhackers von Vorteil ist, wenn ausgleichende Dämpfungs- und/oder Federungs-Relativbewegungen des Fahrerhauses in Bezug auf das LKW-Fahrgestell limitiert oder gar ausgeschlossen sind.

In einer weiteren beispielhaften Ausführung des erfindungsgemäßen Trommelhackers ist das Federdämpfersystem dazu eingerichtet, automatisch beim Einnehmen einer vorbestimmten angehobenen Stellung, wie einer maximal angehobenen Stellung und/oder der Hackstellung, den Passivzustand einzunehmen. Ferner kann das Federdämpfersystem dazu eingerichtet sein, dass beim Einnehmen der Stellung für den Fahrbetrieb automatisch das Federdämpfersystem aktiviert ist, um etwaige vertikale Relativbewegungen zwischen Fahrerhaus und LKW-Fahrgestell zur Erhöhung des Komforts zum einen zuzulassen und zum anderen abzufedern und/oder zu dämpfen.

Gemäß einer weiteren beispielhaften Ausführung des erfindungsgemäßen Trommelhackers weist die mechanische Lenkverbindung eine teleskopierbare Gelenkwelle auf. Beispielsweise ist die Gelenkwelle frei von einem Antrieb. Die Gelenkwelle kann demnach eine mechanische Lenkverbindung zu den Rädern des LKW-Fahrgestells derart herstellen, dass bei einer Hebe- und gegebenenfalls kombinierten Versatzbewegung des Fahrerhauses relativ zum LKW-Fahrgestell die Gelenkwelle einen teleskopartigen Längenausgleich durchführt. Der Längenausgleich kann passiv schlicht durch die insbesondere mittels des Hebemechanismus und gegebenenfalls Versatzmechanismus initiierte Relativbewegung zwischen dem Fahrerhaus und dem LKW-Fahrgestell erfolgen, ohne dass ein einschränkender Antrieb für die Gelenkwelle notwendig ist.

Gemäß einer beispielhaften Weiterbildung der vorliegenden Erfindung ist die Gelenkwelle insbesondere mittels eines Winkelgetriebes mit dem originalen LKW-Lenkstock und/oder dem originalen LKW-Lenkgetriebe gekoppelt. Dadurch ist es möglich, die Umbaumaßnahmen gegenüber der Basis beziehungsweise dem Grundaufbau des LKW zu begrenzen, insbesondere indem eine neuartige Gelenkwelle zwischen die Original-Lenkungskomponenten zum Ersatz der Original-LKW-Gelenkwelle gesetzt wird.

Gemäß einem weiteren Aspekt der vorliegenden Erfindung, der mit den vorhergehenden Aspekten und beispielhaften Ausführungen kombinierbar ist, ist ein mobiler Trommelhacker mit einem LKW-Fahrgestell, einer auf dem LKW-Fahrgestell angeordneten Hackerzelle und einem auf dem LKW-Fahrgestell angeordneten Fahrerhaus mit einem Sitz und Innenraumkomponenten, wie Bedienkonsolen, Pedalen und/oder einem Lenker, bereitgestellt.

Der mobile Trommelhacker kann grundsätzlich wie in der DE 10 2015 106 209 A1 aufgebaut sein, dessen Offenbarung im Hinblick auf den grundsätzlichen Aufbau und die Funktionsweise des Trommelhackers hierin unter Bezugnahme aufgenommen sind. Die Hackerzelle kann einen Maschinenständer mit einer Hacktrommel, einem Materialeinzug und einem Materialaustragsvorrichtung umfassen. Ferner kann der mobile Trommelhacker eine Ladevorrichtung, beispielsweise in Form eines Krans, aufweisen. Die Hackerzelle kann über einen Nebenantrieb eines Antriebsmotors des LKW-Fahrgestells oder dessen Getriebe angetrieben sein. Des Weiteren ist es möglich, dass die Hackerzelle mit einem eigens dafür konzipierten Antriebsmotor versehen ist. Das LKW-Fahrgestell bildet die Basis beziehungsweise den fahrbaren Untersatz eines LKW. Ein LKW ist gemäß allgemeinem Sprachgebrauch im Sinne der vorliegenden Offenbarung unter anderem dadurch charakterisiert, dass der Antriebsmotor vorne ist und der LKW autobahnfähig ist, also Geschwindigkeiten von über 80 km/h erzielen kann. LKW-basierte Trommelhacker sind mit einer handelsüblichen LKW-Bereifung ausgestattet und sind an die Aufbaurichtlinien des LKW-Herstellers gebunden, sodass Entwickler anders als bei der Entwicklung von Sondereinsatzmaschinen in der Flexibilität beschränkt sind. Grundsätzlich ist das Fahrerhaus oberhalb einer den Antriebsmotor beherbergenden Motorzelle angeordnet und ist in Bezug auf das LKW-Fahrgestell kippbar, um einen Wartungszugang zum Motorraum zu ermöglichen. Im Motorraum kann eine Kühleranordnung in Fahrtrichtung vor dem Antriebsmotor für den Antriebsmotor des LKW untergebracht sein. Das LKW-Fahrgestell kann eine Basis, auch Basisrahmen oder Aufbaurahmen genannt, aufweisen, die zum Aufnehmen und Tragen der Maschinerie für den Hackbetrieb ausgebildet ist. LKWs kennzeichnen sich ferner dadurch aus, dass sie über eine mechanische Lenkverbindung zur Vorderachse verfügen und ein mechanischer Fahr-Antriebsstrang im Chassis vorgesehen ist.

Das Fahrerhaus kann entsprechend des Aufbaus eines üblichen LKWs in Fahrtrichtung vorne, insbesondere oberhalb des Antriebsmotors, angeordnet sein. In Fahrtrichtung dahinter kann die gesamte Maschinerie des mobilen Trommelhackers angeordnet beziehungsweise auf dem LKW-Fahrgestell aufgebaut sein.

Gemäß dem weiteren erfindungsgemäßen Aspekt ist der Fahrersitz relativ zu den Innenraumkomponenten zwischen einer in Fahrtrichtung orientierten Fahrausrichtung und einer entgegen der Fahrausrichtung, in Richtung der Hackerzelle orientierten Hackausrichtung drehbar. Beispielsweise benötigt das Fahrerhaus nur einen einzigen Sitz, insbesondere den Fahrersitz, um sowohl einen Fahrbetrieb als auch einen Hackbetrieb zu bewerkstelligen, nämlich indem dieser zwischen wenigstens zwei verschiedenen Ausrichtungen, die jeweils für einen der Funktionsbetriebe des Trommelhackers verantwortlich sind, drehbar ist. Insbesondere ist der Sitz in den Betriebs- bzw. Rotationsstellungen arretierbar.

In einer weiteren beispielhaften Ausführung des erfindungsgemäßen Trommelhackers weisen die Innenraumkomponenten der Fahrtrichtung zugeordnete, nahe einer in Fahrtrichtung weisenden Frontscheibe des Fahrerhauses angeordnete Fahrbedienelemente und der Hackausrichtung zugeordnete, nahe einer entgegen der Fahrtrichtung weisenden Rückscheibe des Fahrerhauses angeordnete Hackbedienelemente auf. Das Fahrerhaus kann demnach dahingehend flexibel ausgestaltet sein, dass die Hackbedienelemente ortsfest an einer vorbestimmten Position angeordnet sind. Gleiches gilt für die Fahrbedienelemente. Auf diese Weise kann der Bediener des Fahrerhauses größtmöglichen Komfort sowohl im Fahrbetrieb als auch im Hackbetrieb bewerkstelligen, ohne dass für den jeweiligen Betrieb nicht notwendige Bedienelemente im Weg sind oder stören.

In einer weiteren beispielhaften Ausführung der vorliegenden Erfindung weist das Fahrerhaus ein insbesondere elektrisch tönbares Deckenfenster auf. Dies kann zum Beispiel dadurch erreicht werden, dass eine insbesondere elektrisch tönbare Folie auf das Deckenfenster aufgebracht, insbesondere aufgeklebt, wird. Zum einen kann durch ein Deckenfenster der Sichtbereich verbessert werden. Zum anderen ermöglicht die Tönung einen UV- bzw. Sonneneinstrahlungsschutz.

In einer weiteren beispielhaften Ausführung der vorliegenden Erfindung weist das Fahrerhaus eine entgegen der Fahrtrichtung weisende Rückscheibe auf, wobei die Rückscheibe an einem Übergang zu einem Seitenfenster und/oder Seitenwand des Fahrerhauses abgerundet ist. Dadurch kann der Schwenkbereich der Ladevorrichtung beziehungsweise dessen Krans deutlich vergrößert werden, sodass Produktivitätsvorteile erreichen werden können sowie auch eine Erhöhung des Arbeitsplatzes einhergeht. Gemäß einer beispielhaften Weiterbildung ist die Rückscheibe entlang wenigstens 20 %, insbesondere wenigstens 30 % oder wenigstens 40 %, einer Breitenerstreckung einer Rückseite des Fahrerhauses abgerundet.

Bevorzugte Ausführungen sind in den Unteransprüchen angegeben.

Im Folgenden werden weitere Eigenschaften, Merkmale und Vorteile der Erfindung mittels Beschreibung bevorzugter Ausführungen der Erfindung anhand der beiliegenden beispielhaften Zeichnungen deutlich, in denen zeigen:
- Fig. 1: eine schematische Seitenansicht einer beispielhaften Ausführung eines erfindungsgemäßen mobilen Trommelhackers in einer ersten Betriebsstellung;
- Fig. 2: der Trommelhacker aus Fig. 1 in einer weiteren Betriebsstellung; und
- Fig. 3: eine schematische Draufsicht auf den Trommelhacker gemäß Fig. 1.

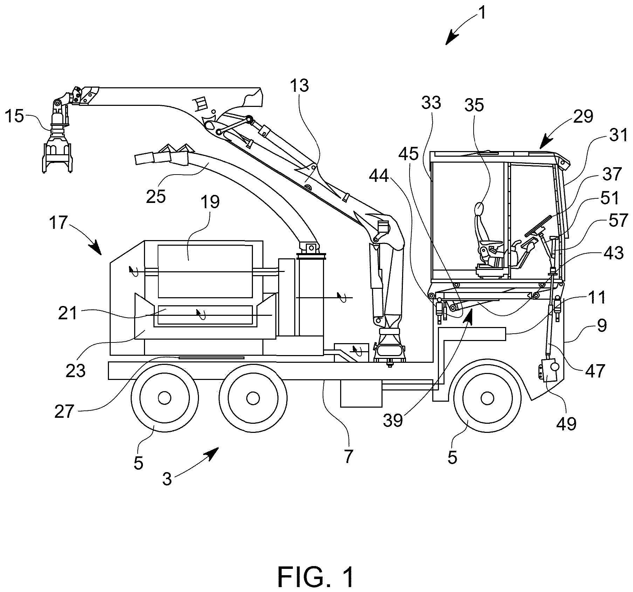

Gemäß der folgenden Beschreibung in beispielhafter Ausführung in der vorliegenden Erfindung ist ein erfindungsgemäßer mobiler Trommelhacker im Allgemeinen mit der Bezugsziffer 1 versehen. Der mobile Trommelhacker 1 umfasst ein LKW-Fahrgestell 3 bzw. ist darauf aufgebaut, welches mehrere LKW-Räder 5 und eine als Gestell fungierende Basis 7 sowie einen frontseitigen Motorraum 9, in dem ein Antriebsmotor 11 des LKW-Fahrgestells 3 angeordnet ist, auf. Auf dem LKW-Fahrgestell 3 befindet sich die gesamte Maschinerie für den Hackbetrieb des Trommelhackers. Zum einen ist auf dem LKW-Fahrgestell 3 eine in Form eines Krans mit einem frontseitigen Greifer 15 ausgebildete Ladevorrichtung 13 angeordnet, die dazu vorgesehen ist, zu hackendes Holzmaterial zur weiteren Verarbeitung in eine sogenannte Hackerzelle 17 zu verlagern. Die Hackerzelle 17 umfasst eine Hackertrommel 19, einen Materialeinzug 21 beispielsweise mit einem Förderband zum Auflegen des Hackmaterials und Einbringen in die Hacktrommel 19. Materialeinzug 21 ist auf einem Materialeinzugstisch 23 angeordnet. Über eine Materialaustragsvorrichtung 25 können Hackschnitzel ausgetragen werden. Die Hackerzelle kann, wie es beispielsweise in Fig. 1 zu sehen ist, über einen schematisch mittels des Bezugszeichens 27 angedeuteten Drehkranz in Bezug auf das LKW-Fahrgestell 3 rotierbar gelagert sein.

Der erfindungsgemäße Trommelhacker 1 umfasst ferner ein Fahrerhaus 29 mit einer Frontscheibe 31 und einer Heckscheibe 33. Im Inneren des Fahrerhauses ist ein Sitz, insbesondere ein einziger Fahrersitz 35, sowie Bedienkonsolen, wie Pedale, ein Lenkrad 37, untergebracht.

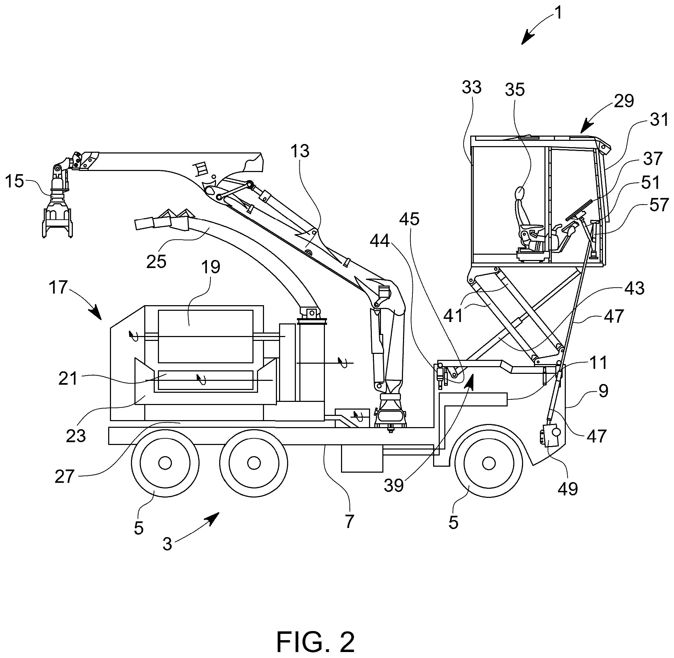

Aus einer Zusammenschau der Figuren 1 und 2 ist zu sehen, dass das Fahrerhaus 29 in Bezug auf das LKW-Fahrgestell 3 anhebbar gelagert ist. Dazu weist der Trommelhacker 1 einen Hebemechanismus 39 auf, der zum einen ein Gestänge 41 und zum anderen einen Hydraulikzylinder 43 zum Veranlassen der Hebe- und Absenkbewegung des Fahrerhauses 29 relativ zum LKW-Fahrgestell 3 aufweist. Der Hebemechanismus 39 kann ein Federdämpfersystem zum Abfedern und/oder Dämpfen von Relativbewegungen, insbesondere in Vertikalrichtung zwischen Fahrerhaus 29 und Fahrgestell 3, aufweisen. Das Federdämpfersystem umfasst eine Feder-Dämpferanordung 44 und einen Hydraulikzylinder 45.

Ein weiterer wichtiger Aspekt der vorliegenden Erfindung ist insbesondere in Fig. 2 ersichtlich, in der eine angehobene Stellung des Fahrerhauses 3 relativ zum Fahrgestell 29 abgebildet ist. Dabei ist zu sehen, dass auch in der erhöhten Stellung des Fahrerhauses 29 eine mechanische Lenkverbindung zwischen Fahrerhaus 29 und Fahrgestell 3 erhalten ist. Die mechanische Lenkverbindung wird über eine teleskopierbare Gelenkwelle 47 realisiert. In der abgesenkten Stellung gemäß Fig. 1 ist die Teleskopstange der Gelenkwelle 47 eingefahren.

Des Weiteren liegt ein Vorteil des erfindungsgemäßen Trommelhackers darin, dass die mechanische Gelenkwelle 47 dazu eingerichtet ist, mit den übrigen Original-LKW-Lenkungskomponenten zu kooperieren, um die Lenkung zu realisieren. Beispielsweise ist die Gelenkwelle 47 fahrgestellseitig mit dem Original-LKW-Lenkgetriebe 49 verbunden, welches wiederum über ein nicht dargestelltes Lenkgestänge mit den Rädern 5 kraftübertragend verbunden ist. Am anderen Ende der Gelenkwelle 47 ist diese über ein Winkelgetriebe 51 mit dem Original-LKW-Lenkstock 53 und somit mit dem Original-LKW-Lenkrad 37 zur Steuerung des Trommelhackers 1 gekoppelt.

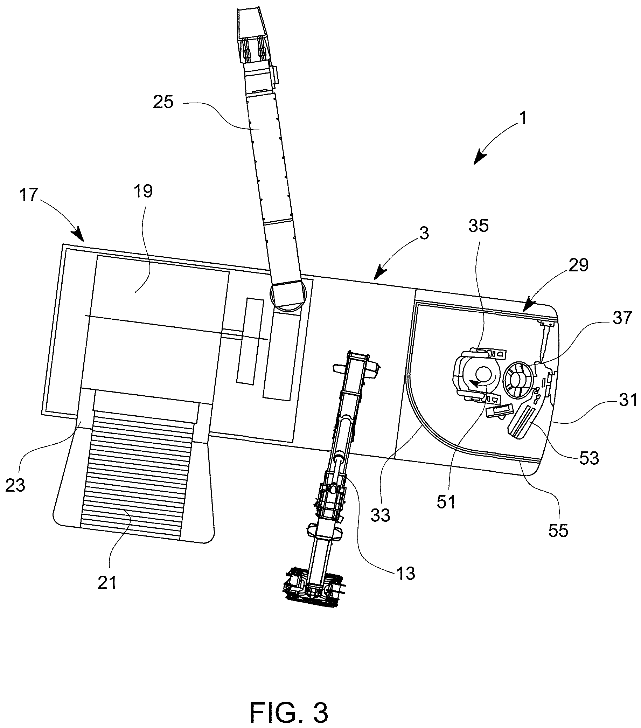

In der Draufsicht auf den Trommelhacker 1 gemäß Fig. 3 sind weitere erfindungsgemäße Aspekte ersichtlich. Zum einen ist erkennbar, dass in dem Fahrerhaus 29 nur ein einziger Sitz, nämlich der Fahrersitz 35, vorgesehen ist, welcher um eine vertikale Drehachse rotierbar ist, was über das Bezugszeichen 51 angedeutet ist. Die Rotierbarkeit des Sitzes 35 ermöglicht es, dass der Fahrersitz relativ zu den Innenraumkomponenten, wie dem Lenkrad 31 sowie einer Bedienkonsole 53, drehbar ist, um zum einen eine in Fahrtrichtung orientierte Fahrausrichtung (Fig. 3) sowie zum anderen eine entgegen der Fahrausrichtung, in Richtung der Hackerzelle 17 orientierte Hackausrichtung einnehmen zu können.

Die Rückscheibe 33 ist stark abgerundet am Übergang zur Seitenwand bzw. im Seitenfenster 55, sodass ein deutlich vergrößerter Schwenkbereich für die Ladevorrichtung 13 geschaffen ist.

Die in der vorstehenden Beschreibung, den Figuren und den Ansprüchen offenbarten Merkmale können sowohl einzeln als auch in beliebiger Kombination für die Realisierung der Erfindung in den verschiedenen Ausgestaltungen von Bedeutung sein.

### Bezugszeichenliste

- 1: Trommelhacker
- 3: LKW-Fahrgestell
- 5: LKW-Rad
- 7: Basis
- 9: Motorraum
- 11: Motor
- 13: Ladevorrichtung
- 15: Greifer
- 17: Hackerzelle
- 19: Hacktrommel
- 21: Materialeinzug
- 23: Materialeinzugstisch
- 25: Austragsvorrichtung
- 27: Drehkranz
- 29: Fahrerhaus
- 31: Frontscheibe
- 33: Rückscheibe
- 35: Fahrersitz
- 37: LKW-Lenkrad
- 39: Hebemechanismus
- 41: Gestänge
- 43: Hydraulikzylinder
- 44: Feder-Dämpferanordung
- 45: Hydraulikzylinder
- 47: Teleskopierbare Gelenkwelle
- 49: Lenkgetriebe
- 51: Pfeil
- 53: Bedienelemente
- 55: Seitenfenster

## Patentansprüche

1. Mobiler Trommelhacker (1) umfassend ein LKW-Fahrgestell (3), eine darauf angeordnete Hackerzelle (17) und ein Fahrerhaus (29),
**dadurch gekennzeichnet, dass**
das Fahrerhaus (29) in Bezug auf das LKW-Fahrgestell (3) anhebbar gelagert ist und eine insbesondere ausschließlich mechanische Lenkverbindung zu Rädern des LKW-Fahrgestells (3) aufweist.

2. Trommelhacker (1) nach Anspruch 1, wobei das Fahrerhaus (29) rotationsfest in Bezug auf das LKW-Fahrgestell (3) gelagert ist.

3. Trommelhacker (1) nach einem der vorstehenden Ansprüche, wobei das Fahrerhaus (29) derart anhebbar in Bezug auf das LKW-Fahrgestell (3) gelagert ist, dass es eine abgesenkte Fahrstellung für einen Fahrbetrieb und eine erhöhte Hackstellung für einen Hackbetrieb einnehmen kann, wobei in dem Hackbetrieb die mechanische Lenkverbindung zu den Rädern aufrechterhalten ist.

4. Trommelhacker (1) nach einem der vorstehenden Ansprüche, wobei das Fahrerhaus (29) zusätzlich in Längsrichtung des Fahrgestells (3) verlagerbar ist, wobei insbesondere das Fahrerhaus (29) derart anhebbar in Bezug auf das LKW-Fahrgestell (3) gelagert ist, dass bei einer Hebebewegung zugleich eine Verlagerung in Längsrichtung des Fahrgestells (3) einhergeht.

5. Trommelhacker (1) nach einem der vorstehenden Ansprüche, ferner umfassend einen fest mit dem LKW-Fahrgestell (3) und dem Fahrerhaus (29) verbundenen Hebemechanismus (39) mit einem insbesondere hydraulischen Antrieb, wobei insbesondere der Hebemechanismus (39) ein Gestänge und einen Hydraulikzylinder aufweist.

6. Trommelhacker (1) nach Anspruch 5, wobei der Hebemechanismus (39) ein Federdämpfersystem aufweist.

7. Trommelhacker (1) nach Anspruch 6, wobei das Federdämpfersystem einen Aktivzustand, in dem eine insbesondere vertikale Relativbewegung zwischen dem Fahrerhaus (29) und dem LKW-Fahrgestell (3) gefedert und/oder gedämpft wird, und einen Passivzustand aufweist, in dem eine Relativbewegung zwischen dem Fahrerhaus (29) und dem LKW-Fahrgestell (3) ungefedert und/oder ungedämpft ist, insbesondere ausgeschlossen ist.

8. Trommelhacker (1) nach Anspruch 6 oder 7, wobei das Federdämpfersystem dazu eingerichtet ist, automatisch beim Einnehmen einer vorbestimmten angehobenen Stellung, wie einer maximal angehobenen und/oder Hackstellung, den Passivzustand einzunehmen.

9. Trommelhacker (1) nach einem der vorstehenden Ansprüche, wobei die mechanische Lenkverbindung eine teleskopierbare Gelenkwelle (47) aufweist, wobei insbesondere die Gelenkwelle (47) frei von einem Antrieb ist.

10. Trommelhacker (1) nach Anspruch 9, wobei die Gelenkwelle (47) insbesondere mittels eines Winkelgetriebes mit dem originalen LKW-Lenkstock und/oder dem originalen LKW-Lenkgetriebe gekoppelt ist.

11. Mobiler Trommelhacker, insbesondere nach einem der vorstehenden Ansprüche, umfassend ein LKW-Fahrgestell (3), eine auf dem LKW-Fahrgestell (3) angeordnete Hackerzelle (17) und ein auf dem LKW-Fahrgestell (3) angeordnetes Fahrerhaus (29) mit einem Fahrersitz (35) und Innenraumkomponenten, wie Bedienkonsolen, Pedalen und/oder ein Lenkrad,
**dadurch gekennzeichnet, dass**
der Fahrersitz (35) relativ zu den Innenraumkomponenten zwischen einer in Fahrtrichtung orientierten Fahrausrichtung und einer entgegen der Fahrausrichtung, in Richtung der Hackerzelle (17) orientierten Hackausrichtung drehbar ist.

12. Trommelhacker (1) nach Anspruch 11, wobei die Innenraumkomponenten der Fahrtausrichtung zugeordnete, nahe einer in Fahrtrichtung weisenden Frontscheibe des Fahrerhauses (29) angeordnete Fahrbedienelemente und der Hackausrichtung zugeordnete, nahe einer entgegen der Fahrtrichtung weisenden Rückscheibe des Fahrerhauses (29) angeordnete Hackbedienelemente aufweisen.

13. Trommelhacker (1) nach einem der vorstehenden Ansprüche, wobei das Fahrerhaus (29) ein insbesondere elektrisch tönbares Deckenfenster aufweist.

14. Trommelhacker (1) nach einem der vorstehenden Ansprüche, wobei das Fahrerhaus (29) eine entgegen der Fahrtrichtung weisende Rückscheibe aufweist, wobei die Rückscheibe an einem Übergang zu einem Seitenfenster und/oder einer Seitenwand des Fahrerhauses (29) abgerundet ist, wobei insbesondere die Rückscheibe entlang wenigstens 20 %, insbesondere wenigstens 30 % oder wenigstens 40 %, einer Breitenerstreckung einer Rückseite des Fahrerhauses (29) abgerundet ist.
